# EUROPEAN PATENT APPLICATION

(11) **EP 4 170 455 A1**
(43) Date of publication of application: **26.04.2023**
(21) Application number: 21842374.7
(22) Date of filing: 10.03.2021
(51) Int. Cl.: G06F 1/16, H04R 1/10, H04R 1/28

(54) **WEARABLE DEVICE**

(30) Priority: 17.07.2020 KR 20200089088
(71) Applicant: Samsung Electronics Co., Ltd., Gyeonggi-do 16677 (KR)
(72) Inventor: JEUNG, Yongbum, Suwon-si Gyeonggi-do 16677 (KR); PARK, Yongwook, Suwon-si Gyeonggi-do 16677 (KR); LEE, Jeock, Suwon-si Gyeonggi-do 16677 (KR)
(74) Representative: Nederlandsch Octrooibureau
(86) International application number: PCT/KR2021/002942
(87) International publication number: WO 2022/014816

(57) **Abstract**

A wearable device according to various embodiments of the present invention may comprise: a housing including a first surface facing a first direction and including a speaker nozzle part, and a second surface facing a second direction opposite to the first direction and including at least one microphone hole; a speaker disposed in the housing; at least one microphone disposed in the housing to collect an acoustic signal; and a partition wall positioned between the speaker and the microphone, wherein a first space between the speaker and the partition wall and a first path for connecting the speaker and the speaker nozzle parts are provided, and a second path which is separated from the first space by the partition wall and connects the microphone and the first path is provided. In the present invention, various other embodiments may be possible.

## Description

### [Technical Field]

Various embodiments of the present disclosure relate to a wearable device that is worn on a user's ear.

### [Background Art]

A portable electronic device, such as a smartphone or a tablet PC, has been gradually developed in a shape that is able to be worn on the user's body in order to improve portability and accessibility by the user. For example, users who use a wearable device worn on the wrist, the head, or the ear are gradually increasing.

Specifically, a wearable device that is able to be worn on a user's ear among wearable devices worn on the user's body may provide convenience through music reproduction, communication, and calling. The wearable device may include an active noise cancelling (ANC) function for removing surrounding noise.

### [Disclosure of Invention]

### [Technical Problem]

In order to improve ANC performance of a wearable device, the locations at which a speaker and a microphone are mounted may be important.

In order to minimize sound interference between a speaker and a microphone mounted in a wearable device, a partition wall structure may be provided between the speaker and the microphone. In this case, the partition wall structure may reduce the aperture ratio of the speaker in comparison with the prior art.

Various embodiments of the present disclosure are to provide a device wearable on the ear, the device having a structure capable of minimizing interference between output sounds in a speaker and a microphone and securing a maximum aperture ratio of the speaker.

Various embodiments of the present disclosure are to provide a device wearable on the ear, the device being capable of improving quality performance and ANC performance by securing a maximum aperture ratio of the speaker.

### [Technical Solution]

According to various embodiments of the present disclosure, a wearable device includes: a housing including a first surface facing a first direction and including a speaker nozzle part and a second surface facing a second direction opposite to the first direction and including at least one microphone hole; a speaker disposed in the housing; at least one microphone disposed in the housing to collect an acoustic signal; and a partition wall located between the speaker and the microphone, wherein a first path connecting a first space between the speaker and the partition wall and the speaker nozzle part from the speaker is provided, and a second path separated from the first space by the partition wall and connecting the microphone and the first path is provided.

### [Advantageous Effects of Invention]

A wearable device according to various embodiments of the present disclosure has a structure capable of reducing an influence of an internal output sound introduced into a microphone and securing a maximum aperture ratio of the speaker, so as to improve quality performance or ANC performance.

A wearable device according to various embodiments of the present disclosure has a structure capable of reducing the influence by an output of a speaker, introduced into a microphone, without reducing the output path of the speaker, so as to reproduce an inverse-phase, thereby improving the ANC performance.

A wearable device according to various embodiments of the present disclosure has a microphone placed in a first housing, and thus may reduce the volume of the wearable device.

### [Brief Description of Drawings]

FIG. 1 and FIG. 2 are perspective views illustrating an appearance of a wearable device according to various embodiments of the present disclosure.
FIG. 3 is a plan view illustrating a wearable device according to various embodiments of the present disclosure.
FIG. 4A is a side view illustrating a wearable device worn on the right-side ear according to various embodiments of the present disclosure, and FIG. 4B is a side view illustrating a wearable device worn on the left-side ear.
FIG. 5A is a partial cut away perspective view illustrating a part of the wearable device of FIG. 3 taken along line A-A'.
FIG. 5B is a view illustrating a perspective view viewing a first housing of a wearable device according to various embodiments of the disclosure.
FIG. 6 is an example view schematically illustrating a first and a second path, a speaker and a microphone arrangement status of a wearable device according to various embodiments of the disclosure.
FIG. 7 is a partial cut away cross-sectional view illustrating a structure of another partition wall according to various embodiments of the disclosure.
FIG. 8A to FIG. 8C are cross-sectional views schematically illustrating a second path according to various embodiments of the disclosure.
FIG. 9 is an exploded perspective view illustrating a wearable device according to various embodiments of the disclosure.
FIG. 10 is a partial cut away perspective view illustrating a wearable device, at least a part of which is taken, according to various embodiments of the disclosure.

### [Best Mode for Carrying out the Invention]

Hereinafter, various embodiments of the present disclosure will be described with reference to the accompanying drawings. However, it is not intended to limit the disclosure by specific embodiment forms, and should be understood to include various modifications, equivalents, and/or alternatives to the corresponding embodiments. In describing the drawings, similar reference numbers may be used to designate similar constituent elements.

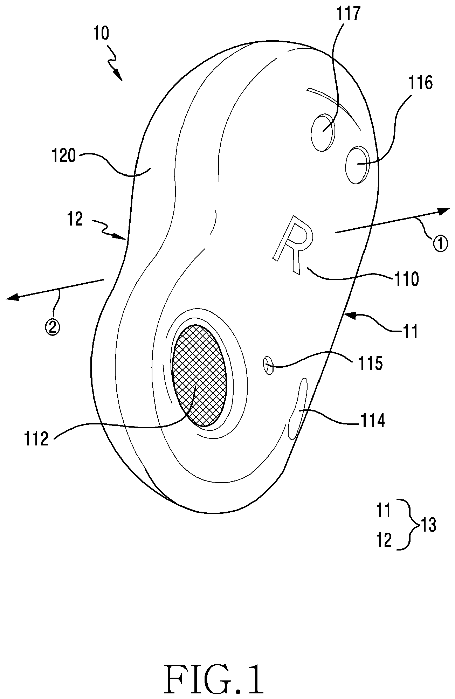

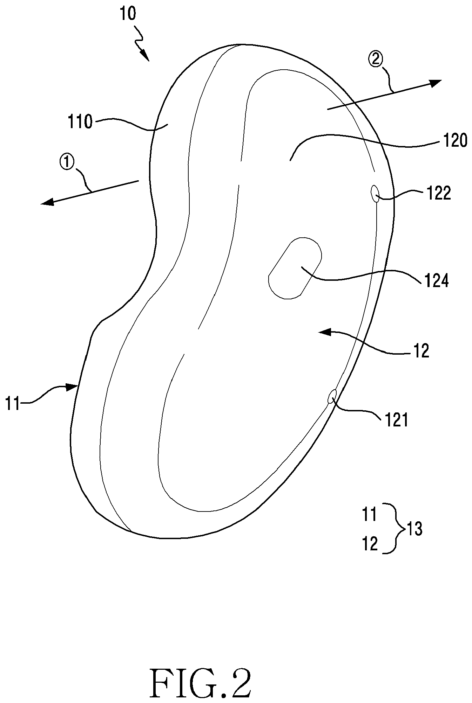

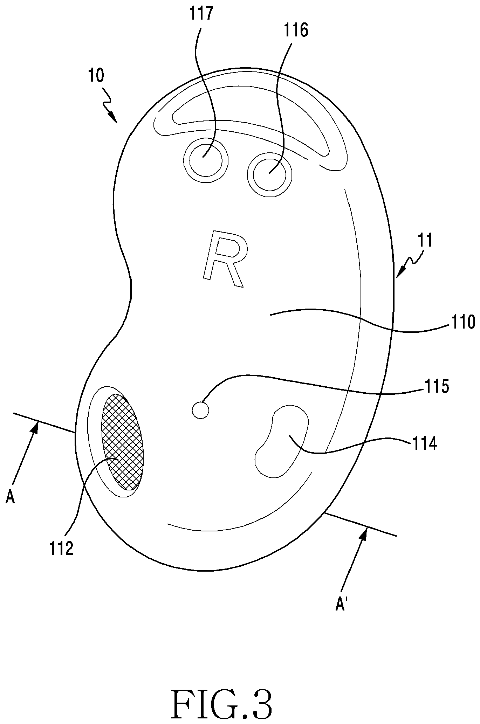

FIG. 1 and FIG. 2 are perspective views illustrating an appearance of a wearable device according to various embodiments of the present disclosure. FIG. 3 is a plan view illustrating a wearable device according to various embodiments of the present disclosure.

Referring to FIG. 1 to FIG. 3, a wearable device 10 according to an embodiment may be an electronic device that is able to be worn on the ear. According to an embodiment, the wearable device 10 may be a device that is able to be worn on the external part of a user's ear. For example, the wearable device 10 is a wearable device that is worn on the right-side ear, and the letter "R" indicating the wearable device worn on the right-side ear may be marked on a first surface 110.

According to an embodiment, the wearable device 10 may include a housing 13 in which a plurality of components are mounted. According to an embodiment, the housing 13 may include a first housing 11 including the first surface 110 facing a first direction ① and a second housing 12 including a second surface 120 facing a second direction ②. The first direction ① may be opposite to the second direction ②. For example, a part of each of the first and second surfaces 110 and 120 may include a curved surface.

According to an embodiment, the first surface 110 of the first housing 11 may include a speaker nozzle part 112, a first port 114, and at least one of charging terminals 116 and 117. For example, the first port 114 may include a leakage port. According to an embodiment, the speaker nozzle part 112 and the first port 114 may be visually exposed to the outside in a view onto the first surface 110.

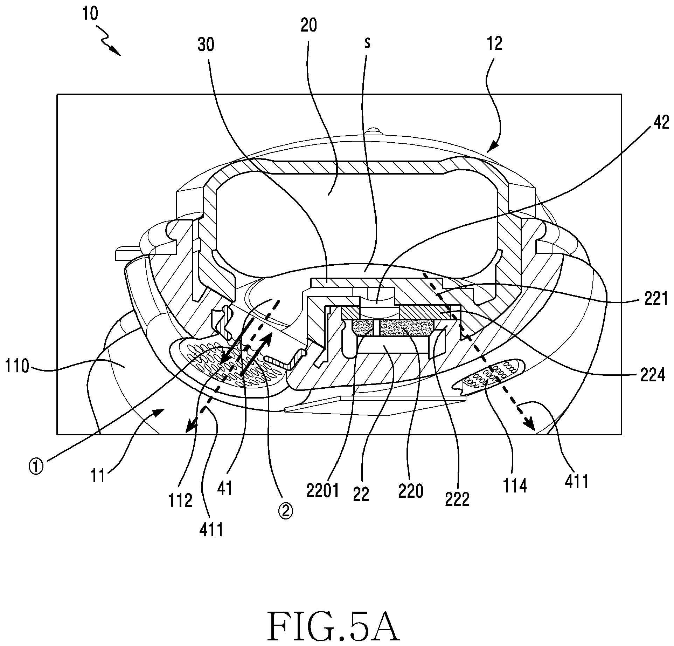

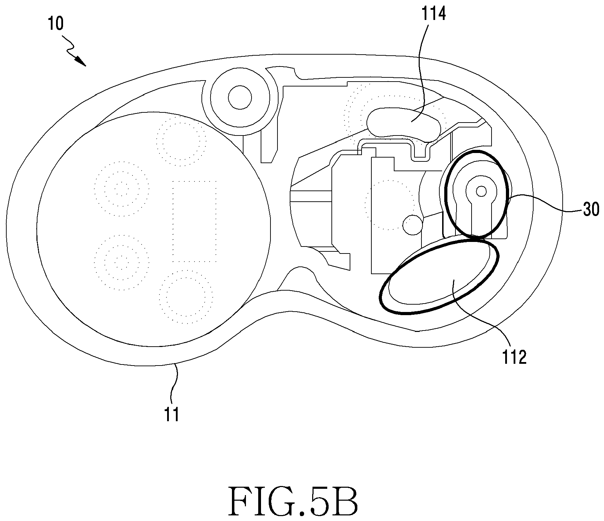

According to an embodiment, the speaker nozzle part 112 may be located on an area of the first surface 110 so that sound output from a speaker (e.g., a speaker 20 of FIG. 5) disposed in a housing passes through at least one opening provided in the housing to be output outside the wearable device 10. For example, the speaker nozzle part 112 may have a plurality of openings and may be made of at least one of a metal material, a polymer material, and a ceramic material. For another example, the speaker nozzle part 112 may include at least one opening and a foreign matter prevention member for preventing foreign matter (e.g., dust or moisture) from being introduced.

According to an embodiment, a pair of the charging terminals 116 and 117 may be disposed and a contact surface thereof may be exposed to the first surface 110.

According to an embodiment, the wearable device 10 may include a sensor (e.g., a proximity sensor and a biometrics sensor) which determines whether a user wears the wearable device. Referring to FIG. 1, a sensor window 115 for determining whether the user wears the wearable device by a sensor (e.g., a proximity sensor and a biometrics sensor) may be disposed on the first housing 11. According to an embodiment, the sensor window 115 may be located between the speaker nozzle part 112 and the first port 114.

According to an embodiment, the second surface 120 of the second housing 12 may include at least one of microphone holes 121 and 122 and a second port 124. According to an embodiment, the second port 124 is a port related to a speaker output and a port utilized for a low-band characteristic tuning of the speaker, and may be utilized for a speaker back volume space facing the second direction ②.

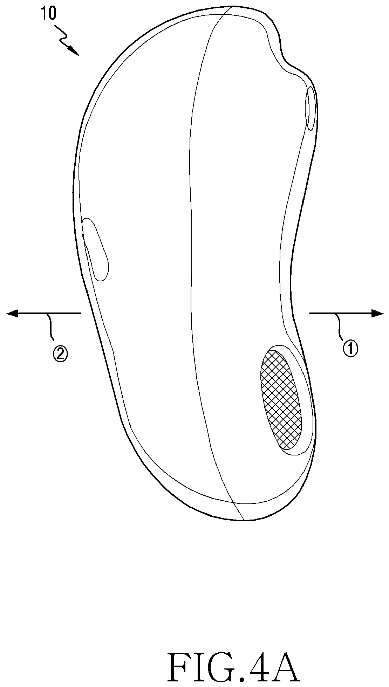

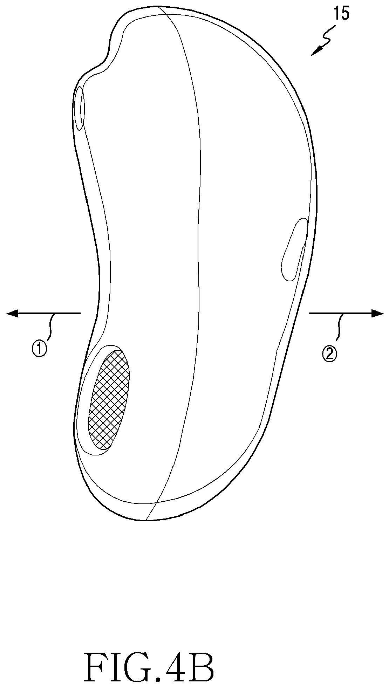

FIG. 4A is a side view illustrating a wearable device worn on the right-side ear according to various embodiments of the present disclosure, and FIG. 4B is a side view illustrating a wearable device worn on the left-side ear.

Referring to FIG. 4A and FIG. 4B, a pair of wearable devices worn on ears may be provided, and may include a wearable device 15 worn on the left-side ear and the wearable device 10 worn on the right-side ear.

According to various embodiments, a wearable device may include a head mounted display (HMD) device such as augmented reality (AR) glasses or a virtual reality (VR) device. For example, the HMD device may include a wearable device which is able to be worn on a user's ear such as the wearable device (e.g., the wearable device 10 or the wearable device 15) illustrated in FIG. 1 to FIG. 4D.

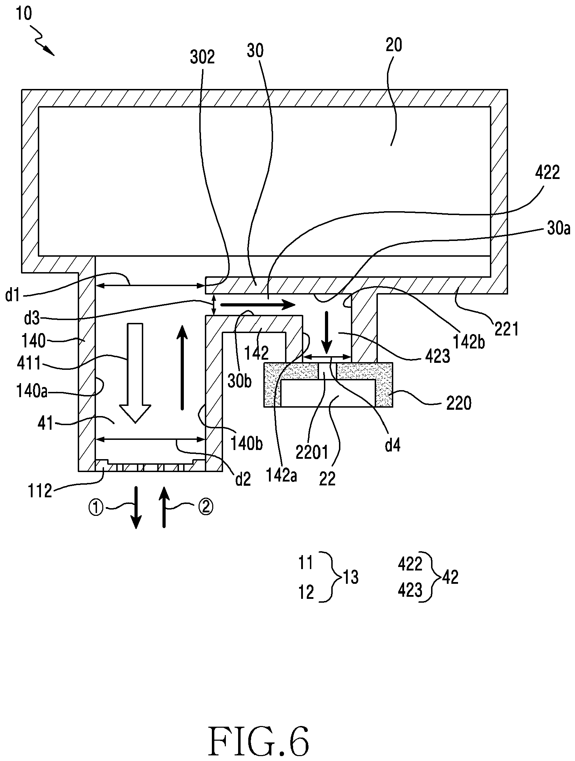

FIG. 5A is a partial cut away perspective view illustrating a part of the wearable device of FIG. 3 taken along line A-A'. FIG. 5B is a perspective view viewing a first housing of a wearable device according to various embodiments of the disclosure. FIG. 6 is an example view schematically illustrating a first and a second path, a speaker, and a microphone arrangement status of a wearable device according to various embodiments of the disclosure.

Referring to FIG. 5A to FIG. 6, according to an embodiment, the wearable device 10 may include a speaker 20, a microphone 22, a first path 41, a second path 42, and a partition wall 30.

According to an embodiment, the speaker 20 may include a diaphragm, an acoustic generation part, and a coil (not illustrated). According to an embodiment, the speaker 20 is disposed in the first housing 11 to generate sound in the first direction ①, and the generated sound may move towards the outside of the first housing 11 through the first path 41 along an arrow direction 411. According to an embodiment, when the diaphragm of the speaker 20 vibrates, a part of speaker sound moving toward the second direction ② opposite to the first direction ① may be output to the outside through the first port 114 or the second port 124. According to an embodiment, the sound output from the speaker may move in the first direction ① through a first path from a resonance space (s) to be output to the outside through the speaker nozzle part 112 (e.g., a dotted arrow 411), and a part of sound which fails to be output to the outside through the first path may move in the second direction ② to be output to the outside through the first port 114.

According to an embodiment, a microphone 22 is an electronic component for collecting a sound signal introduced from the outside into the housing 13, and at least one thereof may be disposed in the housing 13. For example, the microphone 22 may be a feedback microphone. According to an embodiment, a feedback microphone may be a microphone for removing outside noise by comparing the sound output from the speaker 20 of the wearable device 10 and sound introduced from the outside of the wearable device 10 when the wearable device 10 performs an ANC operation. According to an embodiment, the microphone 22 may be disposed at a part spaced apart from the speaker 20 and disposed at a part spaced apart from the partition wall 30. For example, the partition wall 30 may be located between the microphone 22 and the speaker 20.

According to an embodiment, a resonance space (s) may be located in the first direction ① of the speaker 20 and the partition wall 30 may be located between the resonance space and the second path 42 provided to allow a sound to be input to the microphone 22. According to an embodiment, the partition wall 30 may be made by a separate member and attached to an inner support member 221 to provide the second path 42. According to an embodiment, the partition wall 30 and the inner support member 221 may be integrally provided. According to an embodiment, the thickness of the partition wall 30 may be different from the thickness of the inner support member 221.

According to an embodiment, an additional resonance space may be further included in the second direction ② of the speaker 20. For example, an additional resonance space (not illustrated) may be located in the second direction ② of the diaphragm of the speaker 20.

According to an embodiment, the first path 41 may be provided between the speaker nozzle part 112 and the speaker 20. According to an embodiment, the first path 41 is a path through which speaker sound which is the sound generated from the speaker 20 to be output to the outside by passing through the speaker nozzle part 112 passes, and may be provided as a duct structure 140. According to an embodiment, the first path 41 may be provided in the inner support member 221, for example, an inner support frame or a bracket, of the housing 13. According to an embodiment, the first path 41 may face the first direction ①. For example, the first path 41 may have a linear shape or a curved shape, or a combination thereof.

According to an embodiment, the second path 42 may diverge from the first path 41 and may be provided between the first path 41 and the microphone 22. According to an embodiment, the second path 42 is a path through which a sound signal introduced until the sound signal introduced through the first path 41 reaches the microphone 22 passes, and may be provided as a duct structure 142. According to an embodiment, the second path 42 may be provided in a part of the inner support member 221, for example, an inner support frame or a bracket, of the housing. According to an embodiment, the second path 42 may include the third path 422 diverging from the first path 41, and a fourth path 443 extending from the third path 442 and moving a sound signal moved through the third path 422 to the microphone 22.

According to an embodiment, the second path 42 may diverge from the first path 41, and a cross section size of the second path 42 (e.g., d3 and/or d4) may be approximately smaller than a cross section size of the first path 41 (e.g., d1 and/or d2).

According to an embodiment, when it is defined that a distance between a first surface 140a of the duct structure 140 providing the first path 41 and one end part 302 of the partition wall 30 is a first distance d1 and a distance (e.g., a width) between the first surface 140a of the duct structure 140 and a second surface 140b in a direction facing the first surface 140a is a second distance d2, the first distance d1 may be substantially equal to or larger than the second distance d2. According to an embodiment, when a distance between a third surface 30a of a duct structure 142 providing the third path 422 and a fourth surface 30b in a direction facing the third surface 30a is a third distance d3, the third distance d3 may be smaller than the first and the second distance d1 and d2. According to an embodiment, when a distance between a fifth surface 142a of the duct structure 142 providing a fourth path 423 and a sixth surface 142b in a direction facing the fifth surface 142a is a fourth distance d4, the fourth distance d4 may be smaller than the first and the second distance d1 and d2.

According to an embodiment, the third path 422 may be approximately perpendicular to the first direction ①, and the fourth path 423 may be approximately perpendicular to the third path 422 and face the first direction ①. For example, the first path 41 may be substantially parallel to the third path 423.

According to an embodiment, the speaker sound output from the speaker 20 though the first path 41 may move in the first direction ① and may be output to the outside of the wearable device 10 and a sound signal (or an external sound) may be introduced in the second direction ② from the outside of the wearable device 10.

According to an embodiment, at least a part of the first path 41 may share at least a part of a path from which the speaker sound output from the speaker 20 is output and a path through which a sound signal outside the wearable device 10 is introduced into the microphone 22. Therefore, at least a part of the sound signal introduced into the housing 13 through the speaker nozzle part 112 may pass through a part of the first path 41, move toward the second path 42, and be finally collected in the microphone 22.

According to an embodiment, the partition wall 30 may be a member for spatially partitioning a mounting space of the speaker 20 and a mounting space of the microphone 22, and may extend from a part of the housing 13 toward the first path 41. According to an embodiment, the partition wall 30 may be a member for spatially partitioning the second path 42 provided to allow a sound to be input to a speaker resonance space (s) and the microphone 22. The partition wall 30 may extend from a part of the housing 13 toward the first path 41. According to an embodiment, the partition wall 30 may be an injection structure for spatially partitioning the first path 41 and the second path 42 and integrally injection-molded at a part of the housing 13 or made of a separate material to be coupled to the housing 13. For example, the partition wall 30 may be a thin plate shape. According to an embodiment, the partition wall 30 may be coupled to a part of a support member of the first housing 11 or a part of a support member of the second housing 12 through an adhesive member or a bonding.

According to an embodiment, the partition wall 30 may protrude from the inner support member (e.g., a support frame or a bracket) of the housing 13 toward the first path 41, and may extend by the length in which the end part 302 does not protrude within the first path 41. For example, the first distance d1 between the end part 302 and the first surface 140a of the first path 41 may be substantially identical to the second distance d2 between the first surface 140a of the first path 41 and the second surface 140b. When the end part 302 of the partition wall 30 may extend from the first path 41 in a protruding shape, a partial area of the first path 41 may be blocked to cause an obstacle to outputting speaker sound.

According to an embodiment, the partition wall 30 may be disposed to be approximately parallel to the speaker 20 and disposed to be approximately parallel to the microphone 22.

According to an embodiment, the microphone 20 may be disposed at a part of the inner support structure 221 of the housing 13 while at least a part thereof is wound by a microphone sealing member 220. According to an embodiment, the microphone sealing member 220 may elastically support a mounting structure of the microphone 20 and may seal the microphone 20 from the outside.

According to an embodiment, a microphone hole 2201 may be provided through the microphone sealing member 220.

According to an embodiment, when the first housing 11 and the second housing 12 are assembled, an adhesive member 224 (e.g., a rubber tape) may be attached between a part of a support member 222 of the first housing 11 and a part of the support member 221 of the second housing 12, in order to provide the second path 42 of the microphone 20. According to an embodiment, the adhesive member 224 may be disposed on a boundary part of the first housing 11 and the second housing 12 to seal at least a part of the duct structure 142 providing the second path 42.

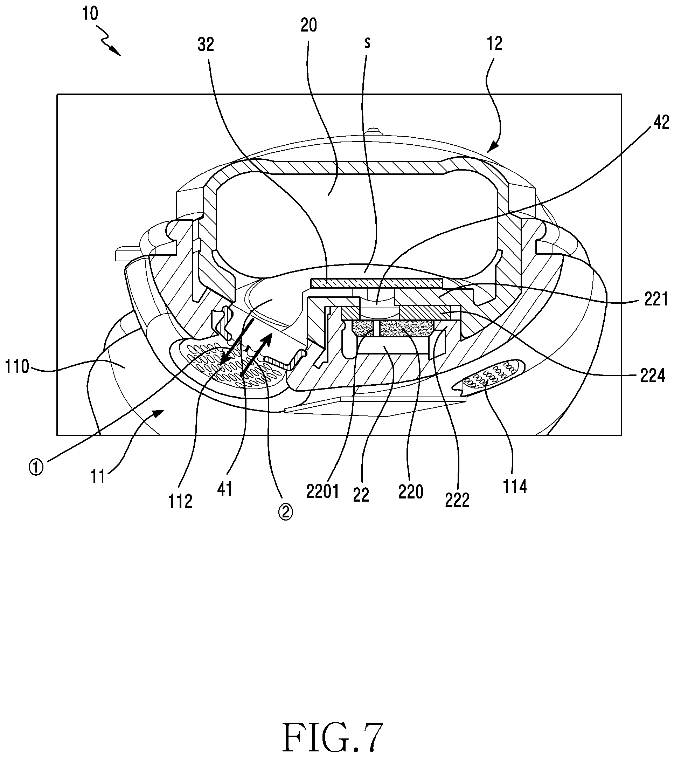

Referring to FIG. 7, a partition wall 32 according to an embodiment may be made by a separate member to be attached to the second housing 12. According to an embodiment, the partition wall 32 may be separately manufactured to be attached, coupled, or injection-molded to the inner support member 221 which is a part of the second housing 12. For example, a material of the partition wall 32 may be different from a material of the inner support member 221.

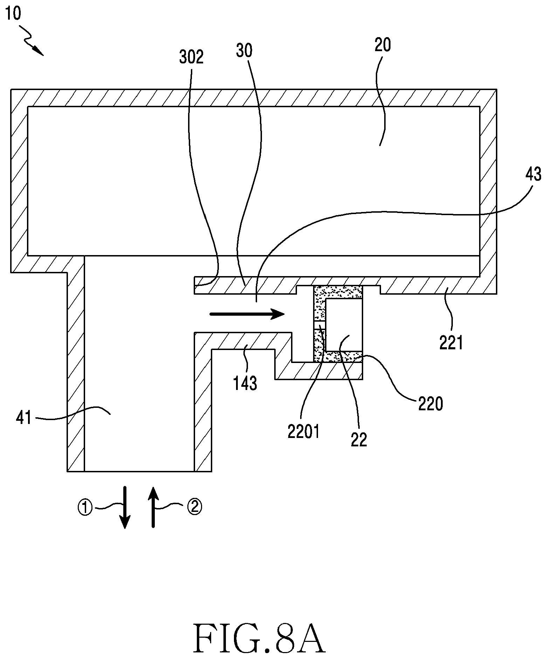

Referring to FIG. 8A, a second path 43 according to an embodiment may diverge from the first path 41, face a direction perpendicular to the first path 41, be provided by a linear duct structure 143, and extend in a direction facing the microphone 22. According to an embodiment, the microphone 22 may be disposed to frontally and directly face the second path 43. According to an embodiment, a sound signal moved through the second path 43 may be collected in the microphone 22 through the microphone hole 2201. According to an embodiment, a direction in which the sound signal output from the speaker 20 may be substantially perpendicular to a direction in which the sound signal moves toward the microphone 22.

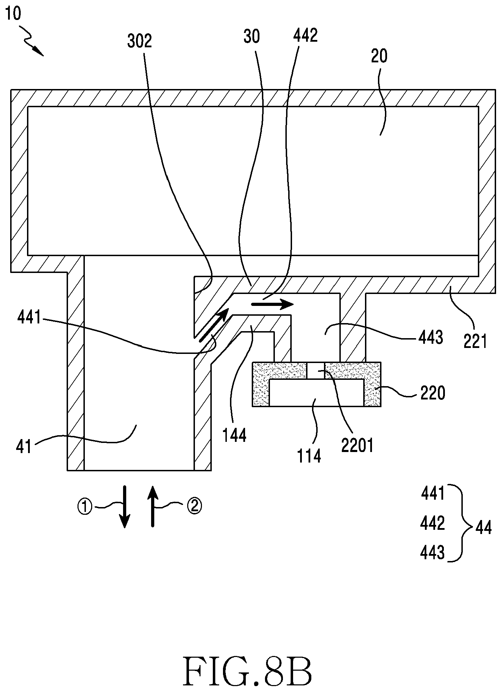

Referring to FIG. 8B, the second path 44 according to an embodiment may be provided as a duct structure 144, and may include a third path 441 diverging in a direction inclined from the first path 41, a fourth path 442 linearly extending from the third path 441, and a fifth path 443 extending in a right-angle direction from the fourth path 442 to be connected with the microphone 22. According to an embodiment, a sound signal having passed through the fifth path 443 may be collected in the microphone 22 through the microphone hole 2201. For example, the third path 441 diverging from the first path 41 may include an inclination to reduce an introduction of the sound, which is output from the speaker 20 and moves in a first direction, into the second path 44.

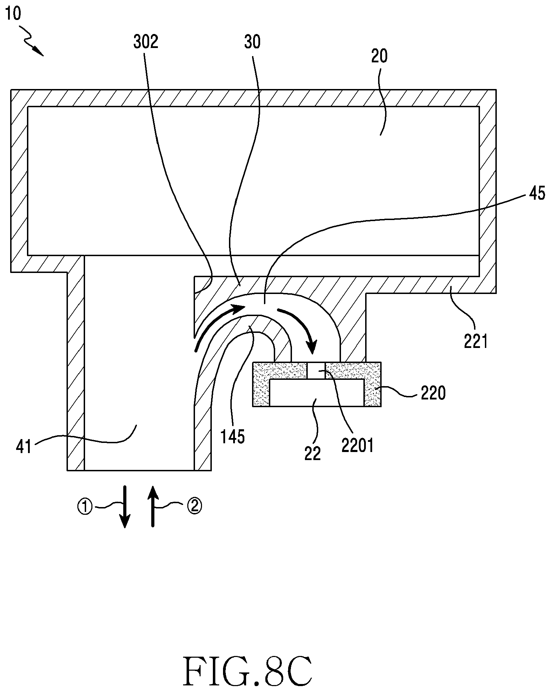

Referring to FIG. 8C, the second path 45 according to an embodiment diverges from the first path 41 and may be provided as a duct structure 145 which extends in a curved shape. For example, the second path 45 has the letter "C" shape, in which one end thereof may be spatially connected to the first path 41 and the other end thereof may be connected to the microphone hole 2201. According to an embodiment, a sound signal having passed through the second path 45 may be collected in the microphone 22 through the microphone hole 2201.

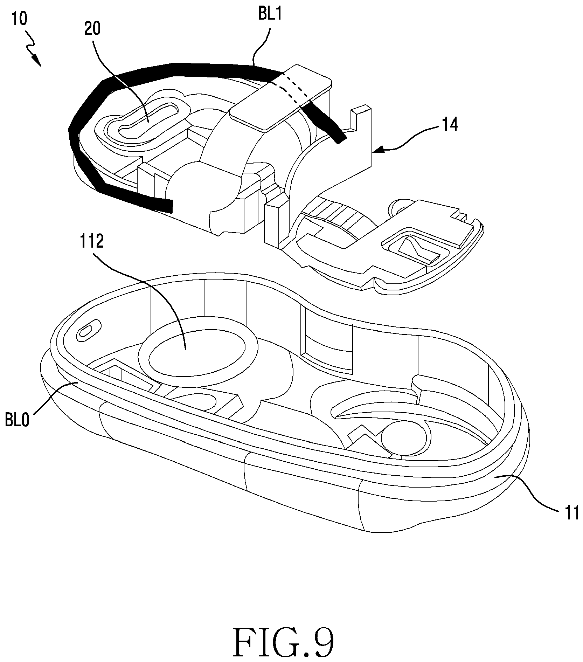

Referring to FIG. 9, according to an embodiment, when the first housing 11 and the second housing 12 are assembled, a boundary part between the first housing 11 and the second housing 12 may block an outside sound signal introduction by a bonding process. For example, reference signals BL0 and BL1 may be an adhesive layer (e.g., an adhesive member).

According to an embodiment, a bracket assembly 14 to which at least one component (e.g., the speaker 20, the microphone 22, or a battery (not illustrated)) of the wearable device 10 is assembled is assembled to the first housing 11, and then the first housing 11 and the second housing 12 may be bonded. A resonance space (s) of the speaker 20 and the microphone 22 are spatially separated by the partition wall 30, so that the first path 41 and the second path 42 may be secured. The duct structure of the second path 42 may be secured by a silicon rubber 224 disposed between the inner support members (e.g., the bracket assembly 14) of the first housing 11 and/or the second housing 12. The first housing 11, the second housing 12, and/or the bracket assembly 14 are coupled by a bonding process, so that the outside sound signal fails to pass through the second path 42 and introduction thereof into the microphone 22 through another gap may be reduced.

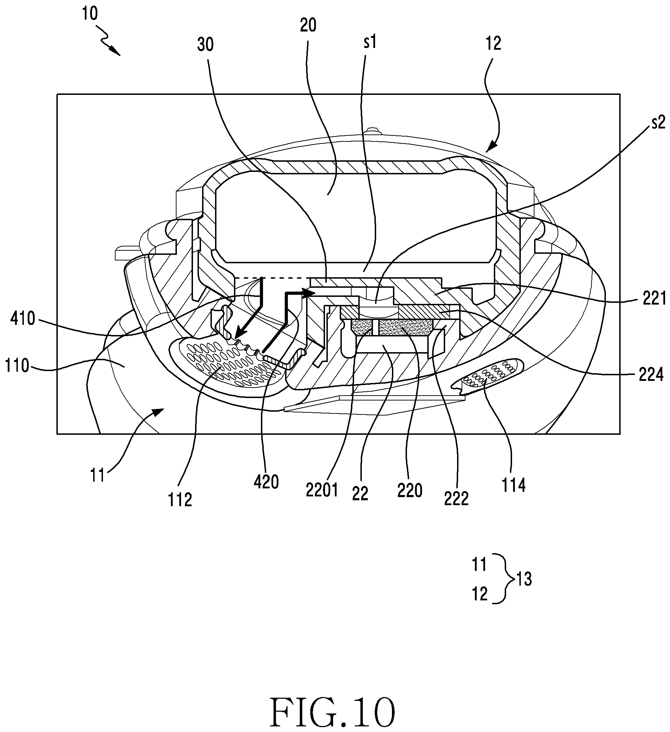

Referring to FIG. 10, the wearable device 10 according to an embodiment may include the housing 13, the speaker 20, the microphone 22, the first and the second path 410 and 420, the first and the second space s1 and s2, and the partition wall 30.

According to an embodiment, the first space s1 may be provided between the speaker 20 and the partition wall 30, and the second space s2 may be provided between the partition wall 30 and the microphone 22. For example, at least a part of the first space s1 may be a resonance space of the speaker 20, and at least a part of the second space s2 may be a space through which the collected acoustic signal passes.

According to an embodiment, the first path 410 may be a path between the first space s1 and the speaker nozzle part 112, and the second path 420 may be a path between the second space s2 and the speaker nozzle part 122. According to an embodiment, at least a part of the first path 410 and the second path 420 may include the same path, and at least a part thereof may be a shared path.

According to an embodiment, a first acoustic signal output from the speaker 20 may pass through the first path 410 and may be output to the outside of the speaker nozzle part 122, and a second acoustic signal may be input to the microphone 22 through the second path 420 by which the second space 420 and the speaker nozzle part 122 are connected.

According to an embodiment, a wearable device (e.g., the wearable device 10 of FIG. 1) includes: a housing (e.g., the housing 13 of FIG. 1) including a first surface facing a first direction (e.g., the first direction ① of FIG. 1) and including a speaker nozzle part (e.g., the speaker nozzle part 112 of FIG. 5A) and a second surface facing a second direction (e.g., the second direction ② of FIG. 1) opposite to the first direction and including at least one microphone hole; a speaker (e.g., the speaker 20 of FIG. 5A) disposed in the housing (e.g., the housing 13 of FIG. 1); at least one microphone (e.g., the microphone 22 of FIG. 5A) disposed in the housing (e.g., the housing 13 of FIG. 1) to collect an acoustic signal; and a partition wall (e.g., the partition wall 30 of FIG. 5A) located between the speaker (e.g., the speaker 20 of FIG. 5A) and the microphone (e.g., the microphone 22 of FIG. 5A), wherein a first path (e.g., the first path 41 of FIG. 5A) connecting a first space (e.g., the first space (s) of FIG. 5A) between the speaker (e.g., the speaker 20 of FIG. 5A) and the partition wall (e.g., the partition wall 30 of FIG. 5A) and the speaker nozzle part (e.g., the speaker nozzle part 112 of FIG. 5A) from the speaker (e.g., the speaker 20 of FIG. 5A) may be provided, and a second path (e.g., the second path 42 of FIG. 5A) separated from the first space (e.g., the first space (s) of FIG. 5A) by the partition wall (e.g., the partition wall 30 of FIG. 5A) and connecting the microphone (e.g., the microphone 22 of FIG. 5A) and the first path (e.g., the first path 41 of FIG. 5A) may be provided.

According to an embodiment, the partition wall (e.g., the partition wall 30 of FIG. 5A) may spatially partition the first path (e.g., the first path 41 of FIG. 5A) and the second path (e.g., the second path 42 of FIG. 5A).

According to an embodiment, the partition wall (e.g., the partition wall 30 of FIG. 5A) may extend from a part of the housing (e.g., the housing 13 of FIG. 1) toward the first path (e.g., the first path 41 of FIG. 5A).

According to an embodiment, a distance between end part of the partition wall (e.g., the partition wall 30 of FIG. 5A) and a first surface of a duct structure providing the first path (e.g., the first path 41 of FIG. 5A) may be equal to or larger than a distance between the first surface of the duct structure and a second surface of the duct structure.

According to an embodiment, the partition wall (e.g., the partition wall 30 of FIG. 5A) may be an injection object which is integrally provided in the housing (e.g., the housing 13 of FIG. 1).

According to an embodiment, the partition wall (e.g., the partition wall 30 of FIG. 5A) may be made by a separate member to be attached to the housing (e.g., the housing 13 of FIG. 1).

According to an embodiment, the first path (e.g., the first path 41 of FIG. 5A) may include a path through which an acoustic signal which is introduced into the housing (e.g., the housing 13 of FIG. 1) passes.

According to an embodiment, the second path (e.g., the second path 42 of FIG. 5A) may include: a third path substantially perpendicular to the first direction; and a fourth path facing the first direction and connecting the third path and the microphone (e.g., the microphone 22 of FIG. 5A).

According to an embodiment, the speaker (e.g., the speaker 20 of FIG. 5A) may be approximately parallel to the microphone (e.g., the microphone 22 of FIG. 5A).

According to an embodiment, the partition wall (e.g., the partition wall 30 of FIG. 5A) may be substantially parallel to the speaker (e.g., the speaker 20 of FIG. 5A) or the microphone (e.g., the microphone 22 of FIG. 5A).

According to an embodiment, a direction in which the first path (e.g., the first path 41 of FIG. 5A) faces may be approximately perpendicular to a direction in which the second path (e.g., the second path 42 of FIG. 5A) faces.

According to an embodiment, a first duct providing the first path (e.g., the first path 41 of FIG. 5A) may be approximately perpendicular to a second duct providing the second path (e.g., the second path 42 of FIG. 5A).

According to an embodiment, a first port disposed adjacent to the speaker nozzle part (e.g., the speaker nozzle part 112 of FIG. 5A) may be disposed on the second surface of the housing (e.g., the housing 13 of FIG. 1).

According to an embodiment, the housing (e.g., the housing 13 of FIG. 1) may be worn on the external ear.

According to an embodiment, a wearable device (e.g., the wearable device 10 of FIG. 1) may include: a housing (e.g., the housing 13 of FIG. 1) including a first surface facing a first direction and including a speaker nozzle part (e.g., the speaker nozzle part 112 of FIG. 5A) and a second surface facing a second direction (e.g., the second direction ② of FIG. 1) opposite to the first direction (e.g., the first direction ① of FIG. 1) and including at least one microphone hole; a speaker (e.g., the speaker 20 of FIG. 5A) disposed in the housing (e.g., the housing 13 of FIG. 1); an electronic component disposed in parallel to a part spaced apart from the speaker (e.g., the speaker 20 of FIG. 5A) to collect an acoustic signal; a first path (e.g., the first path 41 of FIG. 5A) connecting the speaker nozzle part (e.g., the speaker nozzle part 112 of FIG. 5A) from the speaker (e.g., the speaker 20 of FIG. 5A); a second path (e.g., the second path 42 of FIG. 5A) diverging from the first path (e.g., the first path 41 of FIG. 5A) and connecting the electronic component and the first path (e.g., the first path 41 of FIG. 5A); and a partition wall (e.g., the partition wall 30 of FIG. 5A) spatially partitioning a resonance space of the speaker (e.g., the speaker 20 of FIG. 5A) and the electronic component.

According to an embodiment, the partition wall (e.g., the partition wall 30 of FIG. 5A) extends from a part of the housing (e.g., the housing 13 of FIG. 1) toward the first path (e.g., the first path 41 of FIG. 5A) to spatially partition the first path (e.g., the first path 41 of 5A) and the second path (e.g., the second path 42 of FIG. 5A), and does not protrude within the first path (e.g., the first path 41 of 5A).

Various embodiments disclosed in this specification and drawings merely present specific examples in order to easily describe the technical features of the present disclosure and to help understanding of the present disclosure, and are not intended to limit the scope of the embodiments. Accordingly, the scope of the present disclosure should be construed in such a manner that, in addition to the embodiments disclosed herein, all changes or modifications derived from the technical idea of the present disclosure are included in the scope of the present disclosure.

## Claims

1. A wearable device comprising:
a housing comprising a first surface facing a first direction and comprising a speaker nozzle part and a second surface facing a second direction opposite to the first direction and comprising at least one microphone hole;
a speaker disposed in the housing;
at least one microphone disposed in the housing to collect an acoustic signal; and
a partition wall located between the speaker and the microphone,
wherein a first path connecting a first space between the speaker and the partition wall and the speaker nozzle part from the speaker is provided, and
a second path separated from the first space by the partition wall and connecting the microphone and the first path is provided.

2. The wearable device of claim 1, wherein the partition wall spatially partitions the first path and the second path.

3. The wearable device of claim 1, wherein the partition wall extends from a part of the housing toward the first path.

4. The wearable device of claim 1, wherein a distance between an end part of the partition wall and a first surface of a duct structure providing the first path is equal to or larger than a distance between the first surface of the duct structure and a second surface of the duct structure.

5. The wearable device of claim 1, wherein the partition wall is an injection object which is integrally provided in the housing.

6. The wearable device of claim 1, wherein the partition wall is made by a separate member to be attached to the housing.

7. The wearable device of claim 1, wherein the first path comprises a path through which an acoustic signal introduced into the housing passes.

8. The wearable device of claim 1, wherein the second path comprises:
a third path substantially perpendicular to the first direction; and
a fourth path facing the first direction and connecting the third path and the microphone.

9. The wearable device of claim 1, wherein the partition wall is substantially parallel to the speaker or the microphone.

10. The wearable device of claim 1, wherein a direction in which the first path faces is approximately perpendicular to a direction in which the second path faces.

11. The wearable device of claim 10, wherein a first duct providing the first path is approximately perpendicular to a second duct providing the second path.

12. The wearable device of claim 1, wherein a first port disposed adjacent to the speaker nozzle part is disposed on the second surface of the housing.

13. The wearable device of claim 1, wherein the housing is worn on the external ear.

14. A wearable device comprising:
a housing comprising a first surface facing a first direction and comprising a speaker nozzle part and a second surface facing a second direction opposite to the first direction and comprising at least one microphone hole;
a speaker disposed in the housing;
an electronic component disposed in parallel to a part spaced apart from the speaker to collect an acoustic signal;
a first path connecting the speaker nozzle part from the speaker;
a second path diverging from the first path and connecting the electronic component and the first path; and
a partition wall spatially partitioning a resonance space of the speaker and the electronic component.

15. The wearable device of claim 14, wherein the partition wall extends from a part of the housing toward the first path to spatially partition the first path and the second path, and does not protrude within the first path.
